Europäisches Patentamt

(19) European Patent Office

Office européen des brevets

(11) EP 0 813 508 B1

(12) **EUROPEAN PATENT SPECIFICATION**

(45) Date of publication and mention
of the grant of the patent:
**16.06.1999 Bulletin 1999/24**

(51) Int. Cl.[6]: **C04B 35/622**, C04B 35/63,
C04B 35/111, C04B 35/486

(21) Application number: **96908439.1**

(22) Date of filing: **06.03.1996**

(86) International application number:
**PCT/SI96/00005**

(87) International publication number:
**WO 96/28399 (19.09.1996 Gazette 1996/42)**

(54) **A PROCESS FOR FORMING CERAMIC PRODUCTS FROM AN AQUEOUS SUSPENSION WITH A HIGH SOLIDS CONTENT**

VERFAHREN ZUR FORMGEBUNG KERAMISCHER PRODUKTE AUSGEHEND VON EINER WÄSSRIGEN SUSPENSION MIT HOHEM FESTSTOFFGEHALT

PROCEDE DE FORMATION DE PRODUITS CERAMIQUES A PARTIR D'UNE SUSPENSION AQUEUSE A TENEUR ELEVEE EN MATIERES SOLIDES

(84) Designated Contracting States:
**DE ES FR GB IT SE**

(30) Priority: **09.03.1995 SI 9500073**

(43) Date of publication of application:
**29.12.1997 Bulletin 1997/52**

(73) Proprietor:
**INSTITUT JOZEF STEFAN**
**SI-61000 Ljubljana (SI)**

(72) Inventors:
• **KOSMAC , Tomaz**
**1216 Smlednik (SI)**
• **NOVAK KRMPOTIC , Sas a**
**1000 Ljubljana (SI)**
• **ETEROVIC , Darko**
**1000 Ljubljana (SI)**
• **SAJKO, Marjan**
**1000 Ljubljana (SI)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**WO-A-94/02429**

## Description

The object of the invention is a process for forming ceramic products with a high solids content from an aqueous suspension. Usually the ceramic product is sintered after forming.

The technical problem which is solved by the invention is the forming of complex-shaped ceramic products, in which water is used as a vehicle. By forming we understand casting, injection moulding and pouring to prepare green bodies, which are subsequently sintered. By a solid we understand a ceramic or metallic powder or their blends and usual additives. In processes known so far solidification time of the green body is relatively long, or processes of more rapid solidification are complicated and difficult to control.

Thus the aim of the invention is a process for forming ceramic green bodies from an aqueous suspension, containing a considerable amount of finely dispersed solid particles and inorganic additives. These additives should not increase the viscosity in the step of suspension preparation, but fast, homogeneous and controlled solidification of the suspension should be accomplished in the heated mould.

Several processes for forming ceramic green bodies are known. One such widely used process is based on dry pressing of a powder in a die. The starting powder is usually granulated and contains additives, serving as binder, plasticizer and/or lubricant. The main shortcoming of the process is the difficulty of pressing large green bodies, green bodies with high ratio of height to the base plane and complex-shaped green bodies. Forming of ceramic green bodies by casting of an aqueous suspension of ceramic powder into porous water absorbing moulds, e.g., of plaster of Paris or porous plastics occurs by removal of water from the suspension in the water absorbing moulds. In the course of this a solidified cast results, the form of which is determined by the mould. The solidification rate depends on the volume fraction of water in the suspension, on the water absorptivity of the porous mould and on the permeability of the solidified layer of the cast. After solidification the cast is removed from the mould, dried and sintered. The process of forming by slip casting of water suspensions in plaster moulds has been known for a long time and is particularly used for the shaping of functionally less demanding, larger and thin walled products. However in spite of its widespread use this process has many disadvantages. The solidification of the cast is slow, and additionally the moulds have to be thoroughly dried before the repeated use, on their account the productivity is low. During the solidification the finer particles in the suspension migrate towards the mould walls and the coarser and heavier particles are deposited. The water-soluble components in the suspension also tend to migrate. The consequence of all this is a nonuniform composition and structure of the cast. These disadvantages are partly overcome by the process described in the patent application WO 94/02429. In this process solidification of the cast occurs in an impermeable mould, usually by coagulation of powder particles dispersed in water, which is attained by the change of particle surface charge. The solidification occurs more homogeneously and faster than by the process of casting in porous moulds; however, the solidification times are still very long also in this process and represent a disadvantage of the process. A further disadvantage of the process is the occurrence of coagulation over a very narrow pH range of the aqueous suspension, which is hardly attainable and maintainable by chemical reaction of organic reactants added to the suspension, such as urea or urease.

Another process for forming ceramic green bodies by injection moulding is known. The process is frequently used particularly for forming of small complex-shaped green bodies. The most widespread is the process, in which the starting powder is dispersed in a molten thermoplastic binder, the basis of which is usually a paraffin. The suspension is injected under pressure into an impermeable metal mould, where the cast is solidified. After solidification the casts cannot be sintered immediately, due to their high content of organic components. Their volume fraction typically ranges between 30 % and 50 %. One of the biggest disadvantages of this injection moulding process for forming ceramic green bodies is therefore the necessary removal of the organic components, which is a technically demanding, time consuming and expensive operation. Namely, during removal of organic components neither defects as pores nor cracks should be formed in the cast, nor may deformation of the casts occur. Therefore the removal has to proceed very slowly - usually from a few days to some weeks - and moreover under controlled conditions. Additionally it demands special precautions to prevent environmental pollution, explosion or fire hazards and to protect peoples health from the effects of toxic substances. After removal of organic components the strength of the green bodies is relatively low, provoking breakage in their further manipulation.

The disadvantages mentioned above are partly removed in injection moulding processes using aqueous suspensions of ceramic powder with additives enabling solidification in an non-porous mould. In patent specifications US 4.734.237, US 5.145.908, US 5.087.595, US 5.215.946, US 5.028.362, EP 0 246 438 B1 and US 5250251 the use of different water-soluble organic gelling agents, added as additives to the aqueous suspensions for injection moulding, is disclosed.

Generally these additives, based on cellulose, are soluble in cold water and gel on heating; however, additives based on agar are soluble in hot water and gel on cooling. In these processes an aqueous suspension of the starting powder and the gelling additives is prepared, at a temperature where the additives do not gel. The suspension is then injected into a metallic or a plastic mould, the temperature of which is held in the range in which gelling of the additive occurs and thereby the solidification of the castings. One of the great disadvantages of such processes for injection moulding from aqueous suspensions with gelling agent additives is, that these additives significantly increase the suspensions viscosity, already in the suspension preparation step and therefore it is difficult to prepare suspensions with volume fractions of solid higher than 50 %, which are still adequate for injection. A low solids content in the suspension leads to low "green" density of the solidified cast, which results in high shrinkage of the green body during densification, lower final density and deviations of the sintered product from the required dimensional tolerances.

According to this invention, the above mentioned technical problem is solved by a process for forming ceramic products from an aqueous suspension having the volume fraction of finely dispersed solid preferably between 35 % and 60 %, or it may be also higher, if the starting powder with a bimodal or multimodal particle size distribution is used together with inorganic additives, which in the step of suspension preparation do not increase its viscosity. The forming process according to the invention is characterized in that in addition to the solid, the aqueous suspension also contains an added homogeneously dispersed powder of a metal nitride, preferably of aluminium nitride (AlN), in the amount of at least 0.1 wt % of the solid. The metal nitride powder is homogeneously admixed with the suspension by wet milling or mixing. During this procedure the suspension may not be heated above the temperature $T_H$, at which intensive hydrolysis of the added metal nitride commences. The temperature $T_H$ depends on the kind of added metal nitride, the size of the added metal nitride particles and the fraction/amount of added metal nitride in the solid. Next the non-porous mould is filled with the suspension, prepared in described way or the suspension may be poured onto a base, heated to the temperature $T_H$ or above it or the suspension is heated, whereupon intensive hydrolysis of the added metallic nitride is started. The temperature $T_H$ lies, depending on the above mentioned parameters, in the range between 20 to 90 °C; most frequently it lies in the range between 40 to 60 °C.

Subsequently the invention will be described on the basis of Examples and figures illustrating:

Fig. 1 a diagram of the suspension viscosity as a function of the solids content
Fig. 2 a diagram of the viscosity and zeta potential as a function of pH value
Fig. 3 a diagram of the viscosity variation of an aqueous suspension of ceramic powder with an inorganic additive on heating.

According to the invention, the solution of the described technical problem is based on the following facts:

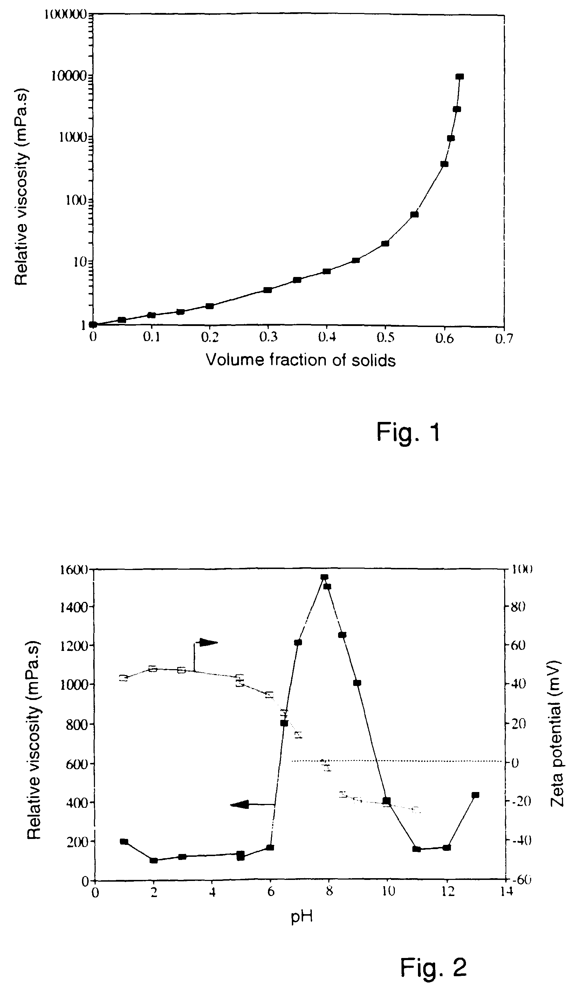

1) The viscosity of concentrated suspensions exponentially increases with increasing solids content until the fluid character of the suspension is lost, i.e., until it is solidified. The conditions are shown in the diagram in Fig. 1. The solidification of an aqueous suspension in a mould can be achieved by external removal of water in a porous mould or by internal physical or chemical bonding of a part of the free water from the suspension. For forming ceramic green bodies from an aqueous suspension by internal bonding of a part of the free water, the suspension has to contain additives reacting with water under technologically acceptable conditions and which simultaneously should not detrimentally influence either the subsequent densification of the green bodies, or the functional properties of the sintered product.

(2) The viscosity of suspensions of ceramic powders depends on the zeta - potential, i.e., on the surface charge of the particles in the suspension, and is actually low when the charge on the particles is large (positive or negative), and high when the charge is small or equal to zero. It is possible to modify the particle surface charge and thus the viscosity by variation of the suspension pH or by additives of different electrolytes, as shown in the diagram on Fig. 2. By addition of additives reacting in an aqueous suspension of ceramic powder, it is possible in addition to the effect described in point (1), to provoke an internal change of the zeta potential.

(3) The powder of metal nitrides, preferably of aluminium nitride (AlN), reacts with water, whereby ammonia is released. Consequently water is consumed and simultaneously the suspension pH can be changed. As described in points (1) and (2), a viscosity increase of the ceramic powder suspension can be provoked by both of these processes. The hydrolysis rate depends on the type of nitride, and its particle size and temperature, and consequently the reaction proceeds faster at higher temperatures.

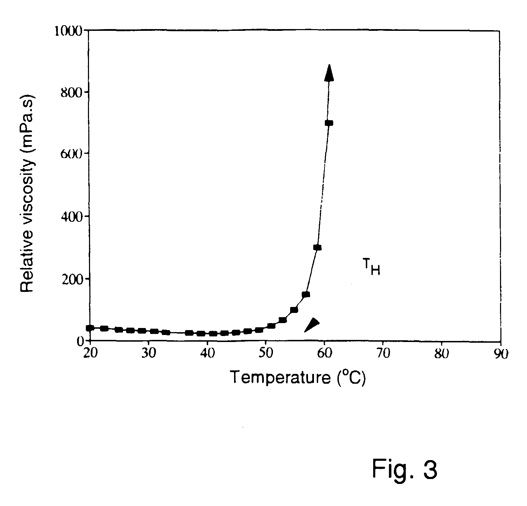

According to the invention, the process for forming ceramic green bodies from an aqueous suspension with high solids content comprises the following steps:
A stable suspension of finely dispersed metal or ceramic powder is prepared, for instance of $Al_2O_3$, $ZrO_2$, $Si_3N_4$, SiC, $SiO_2$, $BaTiO_3$, ZnO or their mixtures in water, actually by usual procedures such as milling and mixing. Suspension stability and a high solids content are attained by the addition of electrolytes (inorganic and organic acids and bases), adjusting the suspension pH, and by use of anionic or cationic deffloculants, increasing the zeta potential on the particle surface. If a ceramic powder with the average particle size not exceeding 1 $\mu$m is dispersed in water, its volume fraction in the suspension is usually between 35 % and 60 %, whereat the viscosity is low enough to enable the forming of green bodies in the mould by casting or injection moulding or pouring. The solids content can also be higher, if a starting powder with bimodal or multimodal particle size distribution is used. To the stable suspension of the finely dispersed ceramic powder 0.1 % to approximately 10 % of a metal nitride powder is added, preferably AlN (calculated with regard to the solids weight). The addition of metal nitride, preferably AlN, also can be higher, but in some cases a higher addition could detrimentally affect the densification process of the green bodies. Therefore 0.2 to 5 % of metal nitride powder is usually added, preferably AlN, based upon the weight of ceramic powder in the suspension. The metal nitride addition, preferably aluminum nitride in an amount over 10 %, can serve besides for forming of the green body, as an unreacted ceramic constituent during sintering in nitrogen atmosphere. The metal nitride powder is homogeneously admixed with the suspension by wet milling or mixing. It is important that during this operation the suspension is not heated above the temperature at which intensive hydrolysis of the metal nitride is started. According to the diagram in Fig. 3, valid for the Example, the temperature $T_H$ is between 20 and 90 °C. With the suspension thus prepared, a metallic, plastic or other mould is filled or the suspension is poured onto a base by any of the known procedures, including pouring, casting and low pressure or high pressure injection moulding. Fast solidification of the green body is assured in such a manner, that the mould or the base onto which the suspension is poured, is heated or the suspension is heated to or above a temperature, which is higher than the temperature $T_H$ at which the suspension viscosity rapidly increases due to the intensive metal nitride hydrolysis. The reaction is fastest above the temperature $T_H$. This depends on the type of metal nitride added, on metal nitride particle size and on the fraction/amount of metal nitride added to the solid. It is usually between 20 and 90 °C, and most frequently between 40 and 60 °C, being higher for larger particles, and lower for smaller particles.

In addition to electrolytes, deffloculants and metal nitride, the suspension may contain various additives, serving a variety of useful purposes, provided, that they do not hinder electrolysis. In order to increase the green body strength, different binders can be added, such as disaccharides, polysaccharides binders based on polyvinylalcohol, binders based on cellulose and polyacrylate binders, as well as lubricants for reducing the friction between the suspensed particles and the walls of the forming machine and the mould, such as different stearates. All theses additives can react with the hydrolysis reaction products, and thus the solidification can be additionally accelerated or the green body strength additionally increased. When the green body is solidified in the mould, it is treated further in a known manner: first it is separated from the mould or the base, then it is dried in air at room temperature or at an increased temperature, and finally it is put in a sintering furnace. In the sintering furnace the sample is fired to the final product. The heating regime, the maximal temperature, the sintering time and atmosphere are known and are adjusted to the material from which the final product is made, and to the required properties of the product. In continuation the invention will be further described on the basis of Examples.

Example 1:

An alkaline suspension is prepared by homogenizing 800 g of aluminum oxide powder (Al$_2$O$_3$) Alcoa A-16 SG in 200 ml of deionized water, in which 3.2 g of Dolapix CE 64 (Zschimmer & Schwarz) were dissolved previously. After deagglomeration in a ball mill, the suspension pH is 9.4 to 10 and the viscosity is under 100 mPa.s. To the suspension, prepared in such a manner, 40 g of AlN powder (Starck) is added, homogeneously admixed with the suspension by milling in the ball mill. After homogenization with AlN, the suspension pH is below 10 and the viscosity below 10 mPa.s ( D=500/s ). The air is removed from the suspension, and then it is poured into a metalic mould, the temperature of which is 90 °C and in which the suspension solidifies in 1-15 minutes, depending on the cast wall thickness and the powder grain size. The relative density of the dried green body is 50-55 %.

Example 2:

A suspension is prepared in a ball mill by homogenizing 860 g of Al$_2$O$_3$ powder (Alcoa A-16 SG), 3.4 g of Dolapix CE 64 and 124 ml of deionized water. To this suspension 4.3 g of AlN (Starck) is added. After milling in the ball mill the suspension viscosity is below 100 mPa.s. After de-aerating the suspension is injected under a pressure of 2.10$^5$ Pa into a metal mould, heated to 50 - 90 °C, where it solidifies in 20 seconds to 1 minute. After drying the green density is 57 to 63 % of the theoretical density. The dried green bodies are sintered at 1600 °C for 2 h in air. After sintering the density, measured according to Archimedes principle, is 3.90 g/cm$^3$ (98 % of theoretical density).

Example 3:

The procedure is the same as in Example 2, except that the suspension is prepared from 870 g of zirconium oxide powder ZrO$_2$ (Huls Troisdorf Dynazircon F5Y), 3.5 g of Dolapix CE 64 and 130 g of deionized water. To this suspension 8.7 g of AlN is added. The sintering of the dried green bodies lasts 2 h in air at 1500 °C. After sintering the density is 99 % of the theoretical one.

Example 4:

The procedure is the same, except that the suspension of $Al_2O_3$ powder is prepared at pH 4.9 by acidifying, and instead of an anionic deffloculant (Dolapix CE 64), 2.8 g of cationic deffloculant (Hedefix) is added.

Example 5:

The procedure is the same as in Example 2, except that 8.6 g of a disaccharide is also added to the suspension.

The following advantages are obtained by the solution according to the invention: in the aqueous suspension for forming ceramic green bodies a high amount of solid is assured and this in spite of the presence of additives needed for the solidification of the cast in an non-porous mould. The high green density of the cast is thus assured after solidification, and smaller shrinkages occur during sintering. Further, owing to the high solids content in the mould, the solidification of the cast occurs relatively quickly, which together with the fact that drying of the moulds is not necessary, enables high productivity. The process according to the invention thus combines some advantages of the slip casting process in plaster moulds, and of the injection moulding process from aqueous suspensions, while avoiding their critical disadvantages. The main advantages are:

- a high solids content and a low suspension viscosity even after the addition of the substance causing subsequent solidification of the suspension
- a rapid and homogeneous solidification in the whole volume
- high density before sintering and high density of products after sintering, and small shrinkage
- removal of the binder is unnecessary
- drying of the moulds is unnecessary
- the procedure is ecologically acceptable, since substances injurious to health, and flammable or explosive substances are not used.

## Claims

1. A process for forming ceramic products from aqueous suspension of finely dispersed solid particles with a high solids content including usual additives, characterized in that a powder of a metal nitride, preferably of aluminium nitride (AlN), is admixed with the water suspension in an amount of at least 0.1 wt %, calculated with regard to the solid, and during the mixing procedure the suspension is held below the hydrolysis temperature $T_H$ of said metal nitride, and with the suspension thus prepared, a mould is filled, or is poured onto a base, while the suspension is heated to or above the said temperature $T_H$.

## Patentansprüche

1. Verfahren zur Formung keramischer Produkte aus einer wäßrigen Suspension feindispergierter fester Partikel mit einem hohen Feststoffgehalt, einschließlich den üblichen Additiven, **dadurch gekennzeichnet,** daß ein Pulver eines Metallnitrids, bevorzugt Aluminiumnitrid (AlN), mit der Wassersuspension in einer Menge von mindestens 0,1 Gew.-% vermischt wird, kalkuliert im Hinblick auf den Feststoff, wobei während des Mischverfahrens die Suspension unterhalb der Hydrolysetemperatur $T_H$ besagten Metallnitrids gehalten wird und wobei das Einfüllen der so hergestellten Suspension in eine Form oder Gießen derselben auf eine Basis erfolgt während die Suspension auf eine Temperatur gleich oder höher als besagte Temperatur $T_H$ erwärmt wird.

## Revendications

1. Procédé de formation de produits céramiques à partir d'une suspension aqueuse de particules solides finement dispersées ayant une teneur élevée en matières solides et comprenant des additifs usuels, caractérisé en ce que l'on mélange à la suspension aqueuse une poudre d'un nitrure métallique (de préférence du nitrure d'aluminium (AlN)) dans une quantité d'au moins 0,1 % en poids calculée par rapport au solide, et en ce que la suspension est maintenue pendant le processus de mélangeage à une température inférieure à la température d'hydrolyse $T_H$ dudit nitrure métallique, et en ce que la suspension ainsi préparée est coulée dans un moule ou versée sur un support, tandis que la suspension est chauffée à une température supérieure ou égale à ladite température $T_H$.

Fig. 1

Fig. 2

Fig. 3